# EUROPÄISCHE PATENTANMELDUNG

(11) **EP 3 875 345 A1**
(43) Veröffentlichungstag der Anmeldung: **08.09.2021**
(21) Anmeldenummer: 21160659.5
(22) Anmeldetag: 04.03.2021
(51) Int. Cl.: B62B 9/00

(54) **RADSYSTEM, KINDERWAGEN MIT RADSYSTEM UND HERSTELLUNGSVERFAHREN DES RADSYSTEMS**

(30) Priorität: 04.03.2020 DE 102020105764
(71) Anmelder: Emmaljunga Barnvagnsfabrik AB, 28268 Vittsjö (SE)
(72) Erfinder: FLYCKT, Tobias, 28268 Vittsjö (SE); SUNESSON, Henrik, 28268 Vittsjö (SE); WEDIN, Erik, 28268 Vittsjö (SE)
(74) Vertreter: Müller Schupfner & Partner Patent- und Rechtsanwaltspartnerschaft mbB

(57) **Zusammenfassung**

Es wird ein Radsystem (1) für einen Kinderwagen bereitgestellt. Das Radsystem (1) umfasst eine Halterung (2) für ein Rad (3), die das Rad (3) so trägt, dass es um eine Rotationsachse (R) herum rotierbar ist, eine Befestigung (2), die die Halterung (5) um eine Lenkachse (L) schwenkbar an einem Kinderwagen festlegen kann, und eine Beleuchtungseinrichtung (4), die an der Halterung (2) vorgesehen ist und zusammen mit der Halterung (2) um die Lenkachse (L) schwenkbar ist. Die Beleuchtungseinrichtung (4) ist so an der Halterung (2) vorgesehen, dass sie im Vergleich zur Befestigung (5) näher an der Rotationsachse (R) angeordnet ist.

## Beschreibung

Die vorliegende Erfindung betrifft ein Radsystem, einen Kinderwagen mit einem solchen Radsystem und ein Herstellungsverfahren des Radsystems.

Im Stand der Technik sind Kinderwägen bekannt, die mit einer Beleuchtung am Chassis des Kinderwagens ausgestattet sind. Jedoch sind solche Beleuchtungen meist ungeeignet, um den Untergrund, auf dem sich der Kinderwagen bewegt, ausreichend auszuleuchten, da sie sich meist an ungünstigen Positionen, wie beispielsweise zu hoch über dem Untergrund, befinden. Ferner sind solche Beleuchtungen relativ zum Kinderwagen starr und unbeweglich an dem Chassis des Kinderwagens befestigt, so dass sie Licht nur in einen relativ zum Kinderwagen feststehenden Bereich vor dem Kinderwagen emittieren. Dies bedingt, dass ein Fahrweg des Kinderwagens in einer Kurve nicht oder nicht ausreichend ausgeleuchtet werden kann. Dadurch entsteht die Gefahr, dass mögliche Hindernisse, die sich in dem Kurvenfahrweg des Kinderwagens befinden, nicht oder nur sehr spät wahrgenommen werden.

Jedoch wird das obige Problem, nämlich die verzögerte Wahrnehmung von Hindernissen im Fahrweg eines Kinderwagens, durch den bekannten Stand der Technik nicht hinreichend gelöst. Daher macht es sich die vorliegende Erfindung zur Aufgabe, ein Radsystem bereitzustellen, das insbesondere das Problem der mangelnden Ausleuchtung des Untergrunds vor dem Kinderwagen und in dessen Fahrweg vermeidet.

Diese Aufgabe wird gelöst mit einem Radsystem gemäß Anspruch 1, einem Kinderwagen gemäß Anspruch 9 und einem Herstellungsverfahren für ein Radsystem gemäß Anspruch 10. Weitere Vorteile und Merkmale der vorliegenden Erfindung ergeben sich aus den abhängigen Ansprüchen.

Erfindungsgemäß wird ein Radsystem für einen Kinderwagen bereitgestellt, umfassend: eine Halterung für ein Rad, die das Rad so trägt, dass es um eine Rotationsachse herum rotierbar ist, eine Befestigung, die die Halterung um eine Lenkachse schwenkbar an dem Kinderwagen festlegen kann, und eine Beleuchtungseinrichtung, die an der Halterung vorgesehen ist und zusammen mit der Halterung um die Lenkachse schwenkbar ist, wobei die Beleuchtungseinrichtung so an der Halterung vorgesehen ist, dass sie im Vergleich zur Befestigung näher an der Rotationsachse angeordnet ist.

Im Vergleich zum Stand der Technik bietet die vorliegende Erfindung das Merkmal, dass die Beleuchtungseinrichtung relativ zu dem Chassis des Kinderwagens schwenkbar, und dass die Beleuchtungseinrichtung nah am Boden angeordnet ist. Dies bietet den Vorteil, dass der Untergrund vor dem Radsystem zuverlässiger und vollständiger ausgeleuchtet werden kann, selbst wenn sich der Kinderwagen in einer Kurvenfahrt befindet. Das Radsystem der vorliegenden Erfindung kann so ausgestaltet sein, dass kein Bauteil, wie beispielsweise ein Teil des Chassis des Kinderwagens, zwischen Beleuchtungseinrichtung und dem Untergrund angeordnet ist, so dass die Beleuchtungseinrichtung den Untergrund vor dem Kinderwagen bzw. vor dem Rad vollständig ausleuchten kann. Die Beleuchtungseinrichtung kann zumindest eine LED als eine Lichtquelle umfassen. Die Beleuchtungseinrichtung kann Licht gerichtet in den Bereich, den das Rad als nächstes durchlaufen wird, emittieren und dies unabhängig davon, ob das Rad gerade eine Kurvenbahn oder eine gerade Strecke durchläuft. Somit kann die vorliegende Erfindung ein Kurvenlicht bereitstellen, das es ermöglicht Hindernisse schneller und frühzeitig wahrzunehmen. Die Beleuchtungseinrichtung kann zumindest eine Linse aufweisen, die eine Fokussierung des Lichts bewirkt, so dass die Lichtmenge effizient genutzt werden kann, um den Untergrund auszuleuchten, und/oder so dass vermieden werden kann, dass etwaig entgegenkommende Verkehrsteilnehmer geblendet und/oder gestört werden. Die Halterung kann eine Gabel mit einem oder zwei Schenkeln (d.h. Gabelholmen) sein, wobei an einem freien Ende des Gabelholms oder zwischen zwei Gabelholmen das Rad drehbar (d.h. rotierbar) gelagert sein kann. Am anderen Ende des Gabelholms bzw. der Gabelholme kann eine Gabelbrücke vorgesehen sein. Im Falle zweier Gabelholme kann die Gabelbrücke die zwei Gabelholme miteinander verbinden. An die Gabelbrücke kann sich ein zylindrischer Gabelschaft anschließen. An dem Gabelschaft kann sich die Befestigung befinden, mit welcher die Halterung drehbar um die Lenkachse an einem Chassis des Kinderwagens, insbesondere an einem Lenkkopf des Kinderwagens, getragen werden kann. Das Chassis des Kinderwagens kann eine rohrartige Struktur sein, die einen Rahmen des Kinderwagens bildet. Die Befestigung kann beispielsweise eine Verlängerung des Gabelschafts sein und sich stiftartig entlang der Lenkachse erstrecken. Ferner kann die Befestigung eine bereichsweise vorgesehene Querschnittsverjüngung aufweisen, mit der die Befestigung an einer korrespondieren Aufnahme an dem Kinderwagen drehbar festgelegt werden kann. Vorzugsweise ist das Radsystem über die Befestigung reversibel d.h. lösbar an dem Kinderwagen festlegbar. Zwischen der Befestigung und der Gabelbrücke kann eine Arretierungsvorrichtung angeordnet sein, mit dessen Hilfe eine Rotation des Radsystems um die Lenkachse herum verhindert werden kann. Die Arretierungsvorrichtung kann so ausgestaltet sein, dass das Radsystem nur in einer vorbestimmten Stellung arretiert werden kann (d.h. eine Drehung des Radsystems um die Lenkachse herum verhindert ist). Diese vorbestimmte Stellung kann die Stellung sein, in der die Gabelbrücke in einer Draufsicht auf das Radsystem und in einer Vorwärtsfahrtrichtung des Kinderwagens vor der Rotationsachse angeordnet ist. Um das Radsystem zu arretieren, kann die Arretierungsvorrichtung mit dem Chassis des Kinderwagens zusammenwirken, insbesondere daran einrasten. Die Arretierung des Radsystems kann über einen Betätiger erfolgen, der an dem Chassis des Kinderwagens angeordnet sein kann. Die Befestigung kann mit einem Lager an dem Kinderwagen so zusammenwirken, das das Radsystem an dem Kinderwagen getragen ist. Das Lager kann ein bekanntes Lenkkopflager sein. Vorzugsweise befindet sich in einer Draufsicht auf das Radsystemlängs der Rotationsachse, die Gabelbrücke in einer Fahrrichtung vor der Rotationsachse des Rades. Dies hat zur Folge, dass das Radsystem als ein sogenanntes Nachlaufsystem ausgestaltet sein kann. Mit anderen Worten dreht sich das Radsystem beim Losfahren des Kinderwagens automatisch so um die Lenkachse, dass die Gabelbrücke in der Draufsicht auf das Radsystem und in Fahrtrichtung immer vor der Rotationsachse des Rades angeordnet ist. Somit kann immer dieselbe Seite der Halterung so ausgerichtet sein, dass sie der Fahrtrichtung zugewandt ist. Aufgrund des oben beschriebenen Nachlaufsystems, kann der Gabelholm bzw. können die Gabelholme der Halterung relativ zu einem horizontalen Untergrund, auf dem der Kinderwagen steht und fährt, geneigt sein. Vorzugsweise schließt ein Gabelholm der Halterung mit dem Untergrund einen Winkel im Bereich von 30° bis 70°, vorzugsweise im Bereich von 40° bis 50°, ein. Der Bereich von 30° bis 70° sorgt dabei für einen optimalen Kompromiss zwischen Weite der Ausleuchtung und Intensität des Lichtes genau vor dem Radsystem. Vorzugsweise ist die Beleuchtungseinrichtung an der Gabelbrücke, insbesondere mittig über dem Rad, angeordnet. Damit kann der Fahrweg gleichmäßig zu beiden Seiten des Rades ausgeleuchtet werden. Die Beleuchtungseinrichtung kann mehrere Lichtquellen umfassen, die regelmäßig oder unregelmäßig an der Halterung verteilt angeordnet sein können. Alternativ kann sich die Beleuchtungseinrichtung auch über die Gabelbrücke und zumindest einen Teil des zumindest einen Gabelholms erstrecken. Die Beleuchtungseinrichtung kann von einer zentralen, in dem Kinderwagen vorgesehenen Energiequelle mit der benötigten Energie versorgt werden. Dies kann über ein Kabel erfolgen, das von der Energiequelle bis zu der Beleuchtungseinrichtung führt. Alternativ kann die Beleuchtungseinrichtung kabellos, insbesondere induktiv, mit Energie versorgt werden. Dazu können entsprechende Spulen an dem Chassis des Kinderwagens und an dem Radsystem vorgesehen sein, so dass keine Kabel über sich relativ zueinander bewegliche Teile (wie beispielsweise zwischen dem Radsystem und dem Chassis des Kinderwagens) verlegt werden müssen. Die Beleuchtungseinrichtung kann über einen Schalter direkt an der Beleuchtungseinrichtung gesteuert werden. Alternativ oder zusätzlich kann die Beleuchtungseinrichtung über eine Bedieneinrichtung, die beispielsweise am Lenker des Kinderwagens angebracht ist, oder über eine App, gesteuert werden. Ferner ist denkbar, dass die Beleuchtungseinrichtung von anderen elektronischen Vorrichtungen, die in dem Kinderwagen untergebracht sind, wie beispielsweise einem Antriebssystem, gesteuert werden kann. Die Beleuchtungseinrichtung kann einen Schalter aufweisen, mit dem die Beleuchtungseinrichtung ein- und ausgeschaltet werden kann. Ferner kann mit dem Schalter eine Intensität des abgegeben Lichtes gesteuert werden. Dabei kann der Schalter als ein Dimmer funktionieren. Darüber hinaus kann mit dem Schalter auch ein Leuchtmodus umgeschaltet werden, so kann beispielsweise zwischen einem dauerhaften Leuchten, einem Blinken und/oder einem bestimmten Blinkmuster umgeschaltet werden. Mit anderen Worten stellt die vorliegende Erfindung ein Kurvenlicht für einen Kinderwagen bereit, das besonders vorteilhaft den Bereich vor einem Rad ausleuchten kann, selbst wenn sich das Rad in einer Kurvenfahrt befindet.

Vorzugsweise sind die Lenkachse und die Rotationsachse so angeordnet, dass sie beabstandet voneinander sind und sich nicht schneiden. Die Lenkachse kann relativ zu der Horizontalen (d.h. zu einem ebenen Untergrund, auf dem der Kinderwagen steht und fährt) im Wesentlichen senkrecht ausgerichtet sein. Die Rotationsachse kann im Wesentlichen parallel zu der Horizontalen angeordnet sein. Im Wesentlichen kann in diesem Fall bedeuten, dass eine normale Toleranz bei der Abweichen von der strikten Ausrichtung mit umfasst ist, insbesondere ein Bereich von +- 5°. Die Anordnung der beiden Achsen ermöglicht es ein besonders vorteilhaftes Nachlaufsystem bereitzustellen. Dabei ist es bevorzugt, dass die Lenkachse in einem Bereich des 1,0-fachen bis 0,4-fachen des Radius' des Rades von der Rotationsachse beabstandet angeordnet ist.

Vorzugsweise umfasst das Radsystem eine Energiequelle, die in der Halterung und/oder in der Beleuchtungseinrichtung angeordnet ist und dazu ausgestaltet ist, die Beleuchtungseinrichtung mit Energie zu versorgen. Die Energiequelle kann ein Akkumulator oder eine Batterie sein. Alternativ oder zusätzlich kann auch ein Energieerzeugungssystem, insbesondere ein Dynamosystem, an dem Radsystem vorgesehen sein, das so mit dem Rad verbunden sein kann, dass es bei einer Drehung des Rades Energie erzeugt und diese dem Beleuchtungssystem zur Verfügung stellt. Zudem kann ein Energiespeicher, insbesondere ein Kondensator, vorgesehen sein, der auch während einem Stillstand des Rades oder während einer vorübergehenden Unterbrechung der Energieversorgung die Beleuchtungseinrichtung mit Energie versorgen kann. Die Energiequelle kann in einem Gabelholm in einer Aussparung aufgenommen sein. Die Aussparung kann so verschlossen sein, dass die Energiequelle vor Umwelteinflüssen, insbesondere vor Wasser, geschützt ist. Dazu kann die Aussparung einen abgedichteten Verschluss aufweisen. Die Aussparung kann dabei schubladenartig ausgestaltet sein, so dass die Energiequelle einfach und problemlos eingeführt und entnommen werden kann. Die Beleuchtungseinrichtung kann die Energiequelle umfassen. Dazu kann die Beleuchtungseinrichtung ein Gehäuse aufweisen, das die Lichtquelle und die Energiequelle darin aufnimmt.

Vorzugsweise kann die Halterung eine als Rücksprung ausgebildete Aufnahme aufweisen, in die die Beleuchtungseinrichtung hinein eingesetzt ist. Die Aufnahme kann eine Vertiefung sein, die in der Halterung ausgebildet ist. Die Beleuchtungseinrichtung kann so in der Aufnahme aufgenommen sein, dass die Beleuchtungseinrichtung nahezu vollständig von der Aufnahme umgeben ist. Vorzugsweise kann die Aufnahme so ausgestaltet sein, dass nur eine Seite der Beleuchtungseinrichtung freiliegt. Die Aufnahme kann integral d.h. einstückig mit der Halterung ausgebildet sein. Dadurch kann die Beleuchtungseinrichtung besonders geschützt in der Aufnahme angeordnet werden. Ferner kann die Beleuchtungseinrichtung nur in einer vorbestimmten Ausrichtung und Position in die Aufnahme eingesetzt werden. Dazu können die Aufnahme und die Beleuchtungseinrichtung komplementäre Elemente aufweisen, die ein Einsetzen der Beleuchtungseinrichtung in die Aufnahme nur in einer vorbestimmten Orientierung zulassen. Somit kann stets der richtige Sitz sowie korrekte Ausrichtung der Beleuchtungseinrichtung sichergestellt werden. Die Aufnahme kann einen umlaufenden Kragen aufweisen, der von der Halterung vorstehet. Der Kragen kann als Schutz für die Beleuchtungseinrichtung dienen, damit bei einer Berührung zwischen dem Radsystem und einem harten Gegenstand, wie beispielsweise einem Bürgersteig, die Beleuchtungseinrichtung keinen Schaden nimmt. Ferner kann an der Aufnahme ein Reflektor festgelegt werden, der dazu dienen kann, das emittierte Licht in einer gewünschten Weise zu filtern. Zusätzlich oder alternativ kann eine Linsenvorrichtung an der Aufnahme festgelegt werden, die dazu dienen kann, das emittierte Licht in eine gewünschte Richtung auszurichten. Die Aufnahme kann dazu ausgestaltet sein, eine Energiequelle zusammen mit der Beleuchtungseinrichtung aufzunehmen. An der Aufnahme kann zumindest ein Rastmechanismus vorgesehen sein, der mit der Beleuchtungseinrichtung zusammenwirkt, um diese in der Aufnahme zu halten. Die Aufnahme kann zudem als Batteriehalter dienen, in den eine Batterie eingesetzt werden kann, die dann durch die Beleuchtungseinrichtung gehalten werden kann und diese mit Energie versorgen kann.

Vorzugsweise kann die Beleuchtungseinrichtung dazu ausgestaltet sein, Licht in eine Abstrahlrichtung, vorzugsweise mit einem Abstrahlwinkel von 35° bis 90°, zu emittieren, und wobei die Abstrahlrichtung im Wesentlichen orthogonal zu der Rotationsachse seht. Das Licht kann in einer kegelartigen Form abgestrahlt werden. Die Abstrahlrichtung kann dabei im Wesentlichen der Höhe des Kegels entsprechen. Mit anderen Worten kann das Licht von der Beleuchtungseinrichtung gerichtet abgegeben werden, wodurch eine gezielte und effiziente Beleuchtung des Bereichs vor dem Rad erzielt werden kann. Die Abstrahlrichtung kann zu dem Untergrund gerichtet sein, um eine Beleuchtung auch unmittelbar vor dem Rad bereitzustellen. Mit anderen Worten kann die Abstrahlrichtung der Tangente bei einer Kurvenfahrt des Rades, der Kurve entsprechen, die das Rad durchläuft. Dadurch kann die weitere zu durchfahrende Kurvenbahn durch die Beleuchtungseinrichtung ausgeleuchtet werden.

Vorzugsweise kann die Beleuchtungseinrichtung zumindest eine punktuelle Lichtquelle und/oder ein Lichtleiter, der entlang seiner Erstreckung Licht emittieren kann, aufweisen. Eine punktuelle Lichtquelle kann eine Lichtquelle sein, die Licht von einem idealisierten Punkt (d.h. einer relativ kleinen Fläche) emittiert. Mit Vorteil kann eine Vielzahl derartiger Lichtquellen entlang einer bestimmten Bahn an der nach vorn weisenden Seite der Gabel angeordnet sein. Dagegen kann ein Lichtleiter eine lichtdurchlässige kabel- bzw. bandartige Struktur sein, die entlang ihrer Erstreckung Licht über ihren Außenumfang emittieren kann. Beispielsweise kann an einem Ende des Lichtleiters eine Lichtquelle angeordnet sein, die Licht in den Lichtleiter hinein emittieren. Der Lichtleiter gibt dann entlang seiner Erstreckung, insbesondere konstant, das Licht wieder ab. Der Lichtleiter kann dabei flexibel sein, so dass er einfach in jeder gewünschten Form verlegt sein kann. Vorzugsweise erstreckt sich der Lichtleiter zumindest teilweise entlang der Gabelholme und über die Gabelbrücke. Zur Aufnahme des Lichtleiters kann die Aufnahme eine längliche Vertiefung sein, in die der Lichtleiter hinein eingesetzt ist. Der Lichtleiter kann symmetrisch hinsichtlich der Lenkachse an dem Radsystem angeordnet sein. Es versteht sich, dass auch eine Kombination eines oder mehrerer Lichtleiter mit einer oder mehrerer punktförmiger Lichtquellen als Beleuchtungseinrichtung zum Einsatz gelangen kann. Es können darüber hinaus verschiedenfarbige Lichtquellen vorgesehen sein, so dass unterschiedliche Effekte erzielt werden können. So kann beispielsweise bei einem Stillstand des Kinderwagens die Beleuchtungseinrichtung ein andersfarbiges Licht, insbesondere rotes Licht, emittieren und bei einer Bewegung des Kinderwagens beispielsweise weißes Licht emittieren. Es können auch mehrere Lichtleiter vorgesehen sein.

Vorzugsweise kann die Beleuchtungseinrichtung abnehmbar an der Halterung angeordnet sein und, insbesondere mit einer formschlüssigen Verbindung, daran festlegbar sein. Die Beleuchtungseinrichtung kann ein integriertes und austauschbares Bauteil sein, das an dem Radsystem festgelegt werden kann. Beispielsweise kann die Beleuchtungseinrichtung mittels magnetischer Kraft an dem Radsystem gehalten werden. Dazu kann ein Magnet (ein Dauermagnet oder ein Elektromagnet) an dem Radsystem oder an der Beleuchtungseinrichtung vorgesehen sein und ein Gehäuse der Beleuchtungseinrichtung oder ein Teil der Aufnahme kann aus einem magnetischen Material gebildet sein, so dass die Beleuchtungseinrichtung an der Halterung des Radsystems gehalten werden kann. Zusätzlich oder alternativ kann die Beleuchtungseinrichtung einen Vorsprung aufweisen, der mit einem Rastmechanismus, der an der Halterung vorgesehen ist, so zusammenwirkt, dass das Beleuchtungssystem abnehmbar an dem Radsystem getragen sein kann. Ferner kann das Beleuchtungssystem ein schlaufenartiges Element aufweisen, welches an einem korrespondierenden und an dem Radsystem vorgesehenen Gegenelement festlegbar, insbesondere einfädelbar, sein kann. Das an dem Radsystem vorgesehene Gegenelement kann an einer Arretiervorrichtung zum Feststellen des Radsystems, so dass es sich nicht um Lenkachse herum drehen lässt, angeordnet sein. Die Energiequelle kann ein integraler Bestandteil der Beleuchtungseinrichtung sein. Ferner kann die Beleuchtungseinrichtung einen integrierten Schalter aufweisen, mit dem die Beleuchtungseinrichtung ein- und ausgeschaltet werden kann.

Vorzugsweise kann das Radsystem neben der ersten Beleuchtungseinrichtung eine zweite Beleuchtungseinrichtung aufweisen, die dazu ausgestaltet ist, Licht relativ zu der ersten Beleuchtungseinrichtung im Wesentlichen in die entgegengesetzte Richtung zu emittieren. Die zweite Beleuchtungseinrichtung kann als Rücklicht und/oder als Positionslicht dienen. Dazu kann die Beleuchtungseinrichtung eine andere Lichtfarbe und oder eine andere Intensität aufweisen als die der ersten Beleuchtungseinrichtung. Beispielsweise kann die zweite Beleuchtungseinrichtung, die als ein Rücklicht verwendet wird, eine rote Lichtfarbe aufweisen. Demgegenüber kann die zweite Beleuchtungseinrichtung, die als ein Positionslicht verwendet wird, eine orangene Lichtfarbe aufweise, so dass insbesondere die Abmessungen des Kinderwagens selbst bei Dunkelheit gut erkennbar sind. Ferner kann durch ein Ausleuchten eines Bereichs hinter dem Rad des Kinderwagens einer den Kinderwagen schiebende Person der Untergrund ausgeleuchtet werden damit die den Kinderwagen schiebende Person nicht ungewollt über Gegenstände stolpert oder in diese hineintritt.

Gemäß einem weiteren Aspekt der vorliegenden Erfindung wird ein Kinderwagen mit zumindest einem Radsystem gemäß einem der obigen Ausführungsformen bereitgestellt. Der Kinderwagen kann ein dreirädriger Kinderwagen sein, bei dem das Radsystem als lenkbares vorderes Rad zum Einsatz kommen kann. Alternativ kann der Kinderwagen auch ein vierrädriger Kinderwagen sein, bei dem das obige Radsystem als die beiden vorderen, lenkbaren Räder zum Einsatz kommen kann. Ferner kann der Kinderwagen ein Chassis aufweisen, das den Rahmen des Kinderwagens bilden kann. An dem Chassis kann eine Aufnahme vorgesehen sein, an der eine Transportschale für ein Kind und/oder ein Baby festgelegt werden kann. Ferner kann der Kinderwagen ein elektrische angetriebener Kinderwagen sein, bei dem zumindest ein Rad, vorzugsweise zwei hintere Räder, angetrieben werden. Dabei kann die Beleuchtungseinrichtung in das elektrische System des elektrisch angetriebenen Kinderwagens integriert sein, so dass die Beleuchtungseinrichtung zusammen und/oder in Abhängigkeit eines Betriebs des elektrisch angetriebenen Kinderwagens gesteuert werden kann. Ferner kann die Beleuchtungseinrichtung durch dieselbe Energiequelle wie auch der elektrische Antrieb des Kinderwagens mit Energie versorgt werden.

Gemäß einem weiteren Aspekt der vorliegenden Erfindung wird ein Herstellungsverfahren eines Radsystems gemäß einer der obigen Ausführungsformen bereitgestellt. Das Herstellungsverfahren kann einen Schritt des Ausbildens der Halterung umfassen, wobei die Aufnahme integral mit der Halterung in einem Schritt erfolgen kann.

Ferne gelten die in Verbindung mit der Vorrichtung vorgebrachten Ausgestaltungen und Vorteile auch in Zusammenhang mit dem erfindungsgemäßen Herstellungsverfahren und anders herum.

Weitere Vorteile und Merkmale der vorliegenden Erfindung ergeben sich aus der nachfolgenden Beschreibung mit Bezug auf die beigefügten Figuren. Es zeigen:
- **Fig. 1**: eine perspektivische Ansicht eines Radsystem gemäß einer Ausführungsform der vorliegenden Erfindung,
- **Fig. 2**: eine perspektivische Ansicht eines Ausschnitt einer weiteren Ausführungsform mit einer teilweisen Explosionsdarstellung,
- **Fig. 3**: eine perspektivische Ansicht eines Ausschnitts eines Radsystems gemäß einer weiteren Ausführungsform der vorliegenden Erfindung,
- **Fig. 4**: eine perspektivische Ansicht eines Radsystem gemäß einer Ausführungsform der vorliegenden Erfindung,
- **Fig. 5**: ein Ausschnitt der in Fig. 4 dargestellten Ausführungsform mit einer abgenommen Beleuchtungseinrichtung,
- **Fig. 6**: eine perspektivische Ansicht eines Ausschnitts eines Radsystems gemäß einer weiteren Ausführungsform der vorliegenden Erfindung, und
- **Fig. 7**: eine perspektivische Ansicht eines Ausschnitts der in Fig. 6 dargestellten Ausführungsform mit einer teilweisen Explosionsdarstellung.

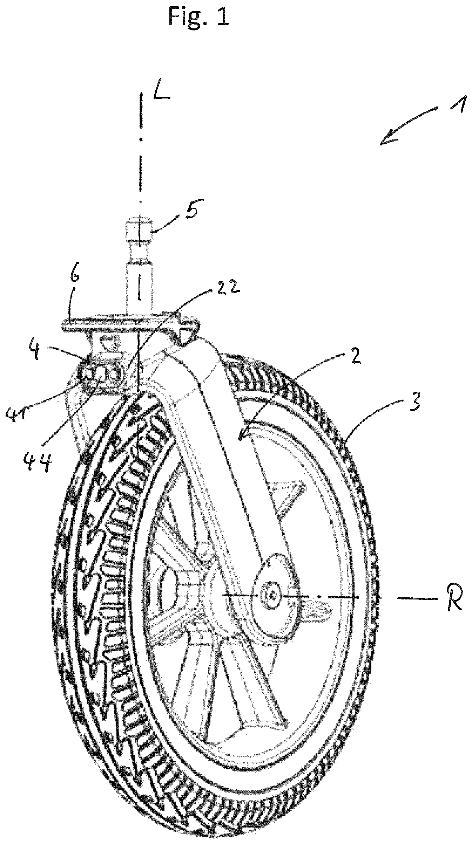

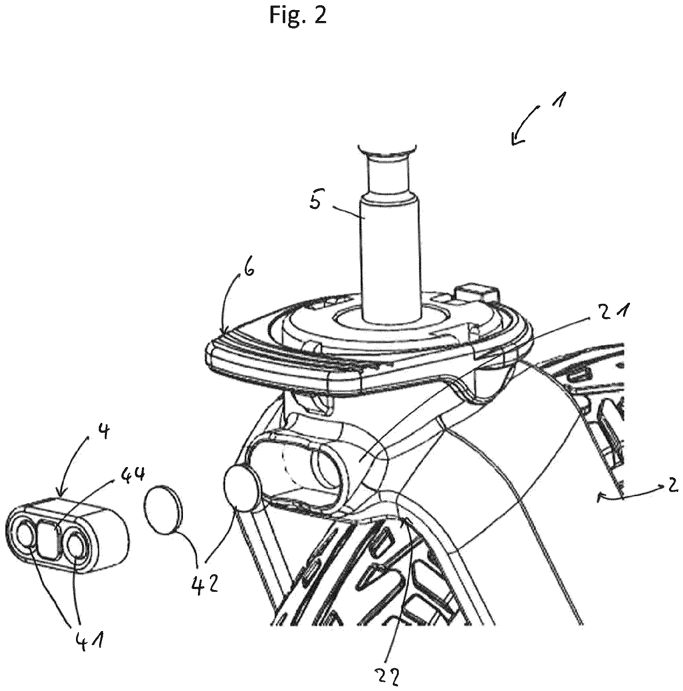

**Fig. 1** zeigt eine perspektivische Ansicht eines Radsystems 1 gemäß einer Ausführungsform der vorliegenden Erfindung. Das Radsystem 1 weist eine Halterung 2, welche ein Rad 3 drehbar trägt, auf. Das Rad 3 wird um eine Rotationsachse R drehbar an der Halterung 2 getragen. Ferner weist das Radsystem 1 eine Befestigung 5 auf, mit welcher das Radsystem an einem Kinderwagen um eine Lenkasche L drehbar festgelegt werden kann. Die Befestigung 5 ist bei der vorliegenden Ausführungsform eine stiftartige Struktur, die sich entlang der Lenkachse L erstreckt und symmetrisch darum ausgebildet ist. Mit der Befestigung 5 kann das Radsystem 1 an einem Chassis eines Kinderwagens lösbar festgelegt werden. Zwischen der Befestigung 5 und der Halterung 2 befindet sich eine Arretierungsvorrichtung 6, die eine Drehung des Radsystems 1 um die Lenkachse L herum verhindern kann. Dazu wirkt die Arretierungsvorrichtung 6, wenn das Radsystem 1 an einem Kinderwagen festgelegt ist, mit einem komplementären Element an dem Kinderwagen zusammen, so dass das Radsystem 1 in einer vorbestimmten Position arretiert ist und sich somit nicht mehr um die Lenkachse L drehen kann. Die Arretierung kann durch einen Betätiger, der an dem Kinderwagen angebracht ist, wieder gelöst werden, so dass sich das Radsystem 1 wieder um die Lenkachse L herumdrehen kann. Die Halterung 2 ist bei der vorliegenden Ausführungsform eine Gabel mit zwei Gabelholmen, zwischen denen das Rad 3 drehbar getragen ist. Die Gabelholme sind mit einer Gabelbrücke 22 miteinander verbunden. An der Gabelbrücke 22 ist eine Aufnahme 21 integral bzw. einstückig mit der Halterung 2 ausgebildet. Die Aufnahme 21 nimmt eine Beleuchtungseinrichtung 4 auf. Bei der Beleuchtungseinrichtung 4 handelt es sich um ein integrales Bauteil, das mit einem Klickmechanismus in der Aufnahme 21 gehalten wird. Dazu weist die Aufnahme 21 eine Rastnase auf, die mit der Beleuchtungseinrichtung 4 so zusammenwirkt, dass die Beleuchtungseinrichtung 4 sicher in der Aufnahme 21 gehalten ist. Bei der vorliegenden Ausführungsform ist die Rastnase aus Kunststoff gebildet. Daher ist die Beleuchtungseinrichtung 4 leicht aus der Aufnahme 21 herausnehmbar und wieder hinein einsetzbar. Die Beleuchtungseinrichtung 4 weist bei der vorliegenden Ausführungsform zwei Lichtquellen 41 auf. Die Lichtquellen 41 sind bei der vorliegenden Ausführungsform jeweils eine LED. Ferner weist die Beleuchtungseinrichtung 4 eine integrierte Energiequelle in Form eine Akkumulators auf. Der Akkumulator lässt sich über ein USB-Kabel laden. Bei einer weiteren nicht dargestellten Ausführungsform wird die Beleuchtungseinrichtung 4 mittels Magneten in der Aufnahme 21 gehalten. Dazu ist ein Magnet 42 an der Beleuchtungseinrichtung 4 angebracht, der mit einem Magnet 42 an der Halterung 2 zusammenwirken und die Beleuchtungseinrichtung 4 in der Aufnahme 21 hält (siehe Fig. 2). Ferner weist bei der vorliegenden Ausführungsform die Beleuchtungseinrichtung einen manuellen Schalter 44 auf, mit dem die Beleuchtung ein- und ausgeschaltet werden kann. Genauer gesagt ist der Schalter 44 zwischen den beiden Lichtquellen 41 angeordnet. Ferner ist in Fig. 1 erkennbar, dass sich die Lenkachse L und die Rotationsachse R nicht schneiden und beabstandet voneinander sind. Mit anderen Worten befindet sich die Gabelbrücke 22 in der Fahrtrichtung vor der Rotationsachse R. Damit wird ein Nachlauf des Rades 3 sichergestellt. Ferner ist somit gewährleistet, dass die Beleuchtungseinrichtung 4, die an der Gabelbrücke 22 angeordnet ist, während der Fahrt immer in Fahrtrichtung zeigt.

**Fig. 2** zeigt einen vergrößerten Ausschnitt der Ausführungsform, bei der die Beleuchtungseinrichtung mittels Magnete in der Aufnahme 21 gehalten wird. Die in Fig. 2 dargestellte Ausführungsform gleicht ansonsten der in Fig. 1 dargestellten. Im Übrigen ist in Fig. 2 die Aufnahme 21 gut zu erkennen. Die Aufnahme 21 ist einstückig mit der Gabelbrücke 22 ausgebildet, so dass sie einen von der Gabelbrücke vorspringenden Rahmen bildet. Gleichzeitig ist die Aufnahme 21 wie ein Rücksprung bzw. eine Vertiefung in der Gabelbrücke 22 ausgebildet. Der Rahmen bietet einen Schutz für die in der Aufnahme 21 aufgenommene Beleuchtungseinrichtung 4.

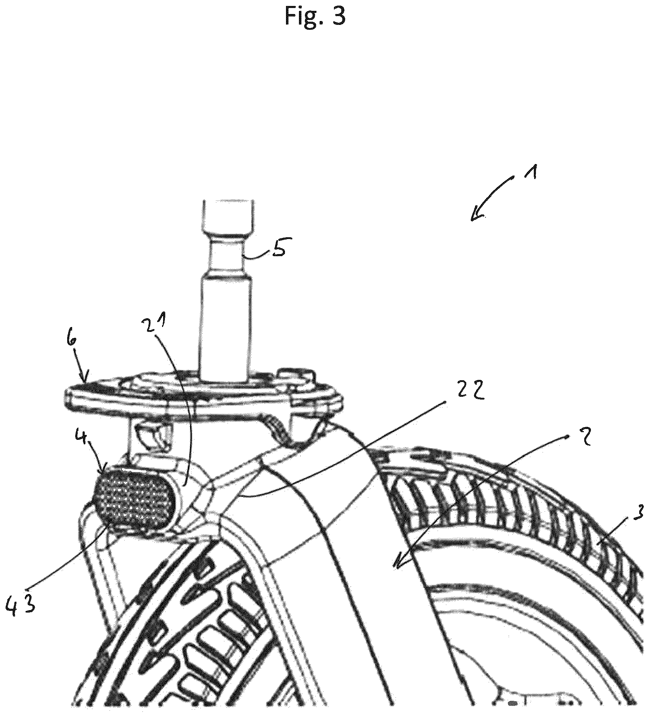

**Fig. 3** ist ein Ausschnitt eines Radsystems 1 gemäß einer weiteren Ausführungsform der vorliegenden Erfindung. Die Ausführungsform entspricht im Wesentlichen der vorherigen Ausführungsformen mit dem Zusatz, dass die Aufnahme 21 mit einem Filter 43 abgedeckt ist, nachdem die Beleuchtungseinrichtung 4 darin angeordnet ist. Der Filter 43 bewirkt, dass das Licht, das von den Lichtquellen 41 emittiert wird, gefiltert und gestreut wird. Dadurch kann eine gleichmäßigere Ausleuchtung des Untergrunds erreicht werden. Hierbei ist der Filter 43 so in der Aufnahme 21 gehalten, dass er als Schalter zum ein- und ausschalten der Beleuchtungseinrichtung 4 fungiert. Genauer gesagt kann durch Aufbringen einer Druckkraft auf den Filter 43 der darunter liegende Schalter 44 der Beleuchtungseinrichtung betätigt werden. Der Filter 43 ist dazu entsprechend nachgiebig und elastisch beweglich in der Aufnahme 21 gehalten. Ferner dient der Filter 43 dazu das Innere der Aufnahme 21 abzudichten, so dass insbesondere kein Wasser und/oder Verunreinigungen in das Innere eindringen und die Beleuchtungseinrichtung, die darin aufgenommen ist, beschädigen können.

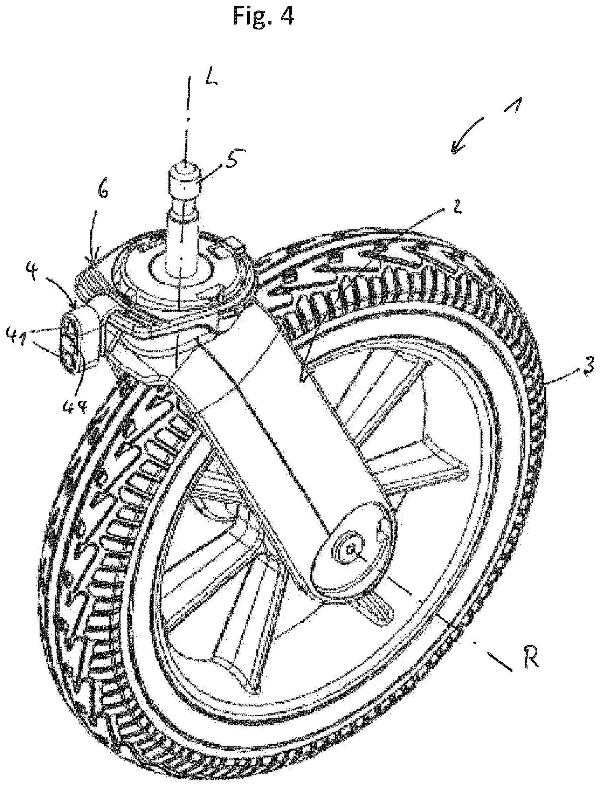

**Fig. 4** ist eine perspektivische Ansicht eines Radsystems 1 gemäß einer Ausführungsform der vorliegenden Erfindung. Die Ausführungsform unterscheidet sich von den obigen Ausführungsformen dadurch, dass die Beleuchtungseinrichtung 4 nicht in einer Aufnahme 21 der Halterung 2 aufgenommen ist, sondern mittels eines Hakens an der Halterung 2 gehalten ist. Genauer gesagt ist an der Beleuchtungseinrichtung 4 eine Art Widerhaken ausgebildet, mit dem die Beleuchtungseinrichtung 4 an der Arretierungsvorrichtung 6 festgelegt, insbesondere eingehakt, werden kann. Dadurch ist die Beleuchtungseinrichtung 4 besonders einfach an dem Radsystem 1 anbringbar und wieder entfernbar. Der Haken zum Einhaken der Beleuchtungseinrichtung 4 ist dabei aus einem elastischen Material gefertigt, so dass er einfach und problemlos in eine an der Halterung 2 vorgesehene Öse eingefädelt werden kann.

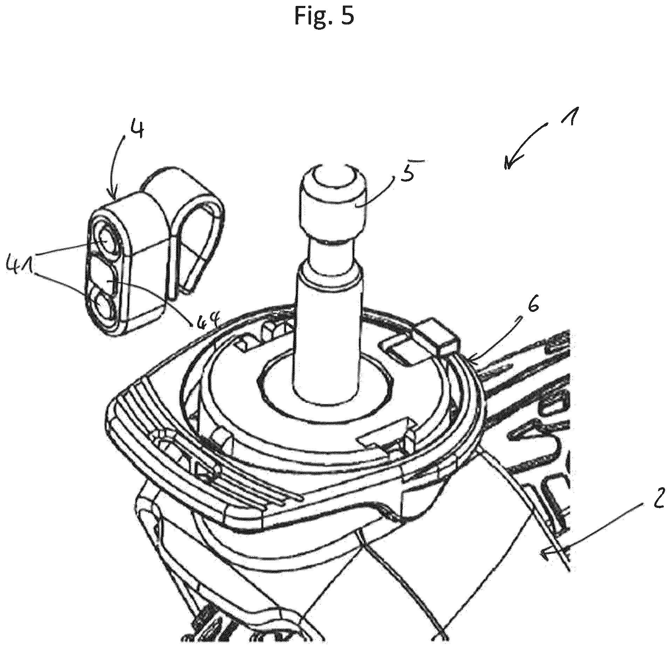

**Fig. 5** ist ein Ausschnitt der in Fig. 4 dargestellten Ausführungsform mit einer abgenommen Beleuchtungseinrichtung 4. In Fig. 5 ist deutlich zu erkennen, dass eine Aussparung in der Arretierungsvorrichtung 6 vorgesehen ist, in die die Beleuchtungseinrichtung 4 eingehakt werden kann. Da sich die Arretierungsvorrichtung 6 ebenfalls zusammen mit dem Rad 3 dreht, dreht sich auch die Beleuchtungseinrichtung 4, die an der Arretierungsvorrichtung 6 festgelegt ist, zusammen mit dem Rad 3.

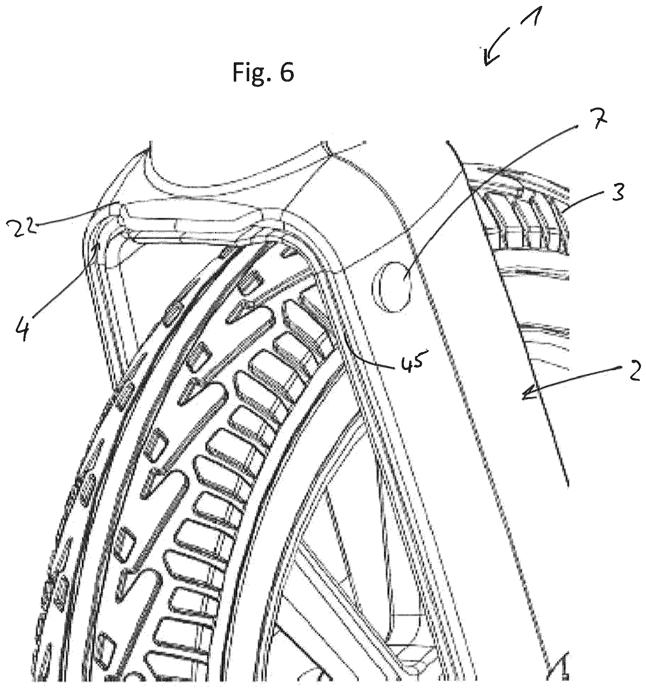

**Fig. 6** ist ein Ausschnitt eines Radsystems 1 gemäß einer weiteren Ausführungsform der vorliegenden Erfindung. Die vorliegende Ausführungsform unterscheidet sich von den Obigen dadurch, dass die Beleuchtungseinrichtung 4 bei der vorliegenden Ausführungsform einen Lichtleiter 45 umfasst, der sich in einer länglichen Aufnahme 21 entlang der Halterung 2 erstreckt. Der Lichtleiter 45 ist dabei eine kabelartige Struktur, die teilweise über die Schmalseiten der Gabelholme und über die Gabelbrücke 22 verläuft. Die Aufnahme 21 ist der Form des Lichtleiters 45 angepasst und nimmt diesen vollständig auf. Somit ist der Lichtleiter 45 vor Beschädigungen geschützt. Der Lichtleiter 45 wird durch eine nicht dargestellte Lichtquelle mit Licht versorgt. Dabei ist der Lichtleiter 45 so ausgebildet, dass er entlang seiner Erstreckung das Licht gleichmäßig über seine Umfangsoberfläche abgibt. Die Lichtquelle wir durch eine Energiequelle mit Strom versorgt. Die Energiequelle ist bei der vorliegenden Ausführungsform in ein Batteriefach 7 aufgenommen. Das Batteriefach 7 ist dabei wasserdicht verschließbar, so dass die Energiequelle darin geschützt ist und trotzdem leicht ausgetauscht werden kann. Bei der vorliegenden Ausführungsform ist die Energiequelle eine Batterie. Die Batterie ist dabei austauschbar.

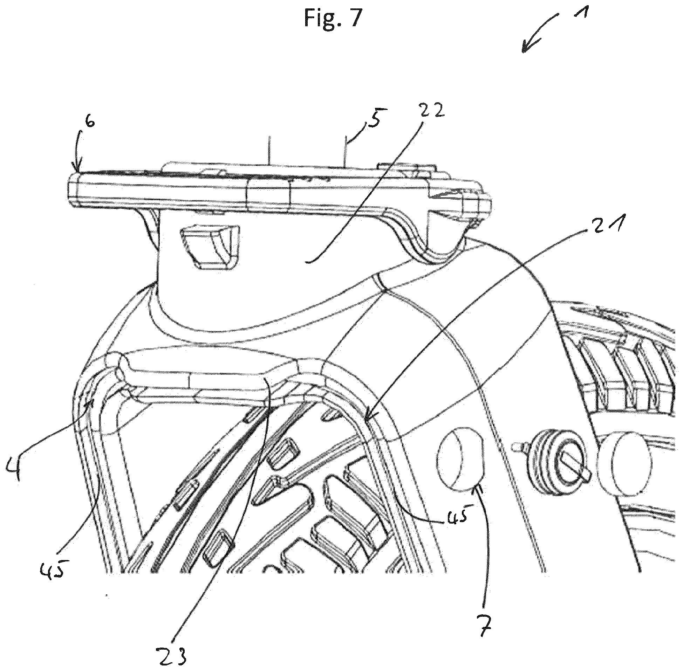

**Fig. 7** ist ein Ausschnitt der in Fig. 6 dargestellten Ausführungsform mit einer teilweisen Explosionsdarstellung. Dabei ist das Batteriefach 7 geöffnet und die Batterie erkennbar. Ferner ist in Fig. 7 zu erkennen, dass die Aufnahme 21 im Bereich der Gabelbrücke 22 einen Vorsprung 23 an zwei Seiten der Aufnahme 21 aufweist. Durch den Vorsprung kann der Lichtleiter 45 vorteilhaft geschützt werden.

### Bezugszeichenliste

- 1: Radsystem
- 2: Halterung
- 3: Rad
- 4: Beleuchtungseinrichtung
- 5: Befestigung
- 6: Arretierungsvorrichtung
- 7: Batteriefach
- 21: Aufnahme
- 22: Gabelbrücke
- 23: Vorsprung
- 41: Lichtquelle
- 42: Magnet
- 43: Reflektor
- 44: Schalter
- 45: Lichtleiter

## Patentansprüche

1. Radsystem (1) für einen Kinderwagen umfassend:
eine Halterung (2) für ein Rad (3), die das Rad (3) so trägt, dass es um eine Rotationsachse (R) herum rotierbar ist,
eine Befestigung (5), die die Halterung (2) um eine Lenkachse (L) schwenkbar an einem Kinderwagen festlegen kann, und
eine Beleuchtungseinrichtung (4), die an der Halterung (2) vorgesehen ist und zusammen mit der Halterung (2) um die Lenkachse (L) schwenkbar ist,
wobei die Beleuchtungseinrichtung (4) so an der Halterung (2) vorgesehen ist, dass sie im Vergleich zur Befestigung (5) näher an der Rotationsachse (R) angeordnet ist.

2. Radsystem (1) gemäß Anspruch 1, wobei die Lenkachse (L) und die Rotationsachse (R) so angeordnet sind, dass sie beabstandet voneinander sind und sich nicht schneiden.

3. Radsystem (1) gemäß Anspruch 2,
wobei die Lenkachse (L) in einem Bereich des 1,0-fachen bis 0,4-fachen des Radius' des Rades (3) von der Rotationsachse (R) beabstandet ist.

4. Radsystem (1) gemäß einem der Ansprüche 1 bis 3, ferner umfassend eine Energiequelle, die in der Halterung (2) und/oder in der Beleuchtungseinrichtung (4) angeordnet ist und dazu ausgestaltet ist, die Beleuchtungseinrichtung (4) mit Energie zu versorgen.

5. Radsystem (1) gemäß einem der Ansprüche 1 bis 4, wobei die Halterung (2) eine als Rücksprung ausgebildete Aufnahme (21) aufweist, in die die Beleuchtungseinrichtung (4) hinein eingesetzt ist.

6. Radsystem (1) gemäß Anspruch 5,
wobei die Aufnahme (21) einen Rastmechanismus aufweist, welcher mit der Beleuchtungseinrichtung zusammenwirkt, um diese in der Aufnahme (21) zu halten.

7. Radsystem (1) gemäß einem der Ansprüche 1 bis 6, wobei die Beleuchtungseinrichtung (4) dazu ausgestaltet ist, Licht in eine Abstrahlrichtung, vorzugsweise mit einem Abstrahlwinkel von 35° bis 90°, zu emittieren, und wobei die Abstrahlrichtung im Wesentlichen orthogonal zu der Rotationsachse (R) seht.

8. Radsystem (1) gemäß einem der Ansprüche 1 bis 7, wobei die Beleuchtungseinrichtung (4) zumindest eine punktuelle Lichtquelle (41) und/oder einen Lichtleiter (45), der entlang seiner Erstreckung Licht emittieren kann, aufweist.

9. Radsystem (1) gemäß einem der Ansprüche 1 bis 8, wobei die Beleuchtungseinrichtung (4) abnehmbar an der Halterung (2) angeordnet ist und, insbesondere mit einer formschlüssigen Verbindung, daran festlegbar ist.

10. Radsystem (1) gemäß einem der Ansprüche 1 bis 9, wobei das Radsystem neben (1) der ersten Beleuchtungseinrichtung (4) eine zweite Beleuchtungseinrichtung aufweist, die dazu ausgestaltet ist, Licht relativ zu der ersten Beleuchtungseinrichtung (4) im Wesentlichen in die entgegengesetzte Richtung zu emittieren.

11. Radsystem (1) gemäß einem der Ansprüche 1 bis 10,
wobei die Befestigung (5) eine Verlängerung eines Gabelschafts ist und sich stiftartig entlang der Lenkachse (L) erstreckt.

12. Radsystem (1) gemäß einem der Ansprüche 1 bis 11,
wobei die Befestigung (5) eine bereichsweise vorgesehene Querschnittsverjüngung aufweist, mit der sie an einer korrespondierenden Aufnahme an dem Kinderwagen drehbar festlegbar ist.

13. Kinderwagen mit zumindest einem Radsystem (1) gemäß einem der Ansprüche 1 bis 12.

14. Herstellungsverfahren eines Radsystems (1) gemäß einem der Ansprüche 1 bis 12.
